# EUROPÄISCHE PATENTSCHRIFT

(11) **EP 2 284 484 B1**
(45) Veröffentlichungstag und Bekanntmachung des Hinweises auf die Patenterteilung: **17.12.2014**
(21) Anmeldenummer: 10007547.2
(22) Anmeldetag: 21.07.2010
(51) Int. Cl.: G01B 11/24, G01M 13/02

(54) **Verfahren zur Messung des Aufmasses eines hartfeinzubearbeitenden Zahnrades**
Method for measuring the dimensions of a cogged wheel to be fine machined
Procédé de mesure des dimensions d'une roue dentée devant être traitée par traitement dur et fin

(30) Priorität: 08.08.2009 DE 102009036776
(43) Veröffentlichungstag der Anmeldung: 16.02.2011
(73) Patentinhaber: NILES Werkzeugmaschinen GmbH, 12681 Berlin (DE)
(72) Erfinder: Maschirow, Boris, 13125 Berlin (DE); Reichel, Frank, Dr., 13053 Berlin (DE); Zenker, Volker, 12623 Berlin (DE)
(74) Vertreter: Gosdin, Michael

(56) Entgegenhaltungen:
- EP-A1- 1 607 713
- JP-A- 57 158 506
- US-A- 4 373 804
- US-A- 4 547 674

## Beschreibung

Die Erfindung betrifft ein Verfahren zur Messung des Aufmaßes eines hartfeinzubearbeitenden Zahnrads mit einer Drehachse, wobei das Zahnrad an seinem Außen- und/oder Innenumfang eine Verzahnung mit einer Anzahl Zähne aufweist, wobei die Zähne auf ihren Zahnflanken ein gegenüber der fertig bearbeiteten Geometrie vorhandenes Aufmaß aufweisen, wobei die Lage der Oberfläche der mit Aufmaß versehenen Zahnflanke mittels optischer Abstandsmessung von einem Abstandssensor ermittelt wird, indem ein Lichtstrahl vom Abstandssensor auf die Oberfläche gerichtet wird, und wobei der Lichtstrahl so auf die Oberfläche geleitet wird, dass er senkrecht auf der Drehachse steht oder parallel zu dieser Richtung ist.

Ein Verfahren dieser Art ist aus der US 4 547 674 bekannt. Dort werden die Zahnflanken eines Zahnrades mittels eines Laser-Abstandssensor vermessen.

Insbesondere bei der Herstellung von Zahnrädern kommt dem abschließenden Hartfeinbearbeitungsprozess eine wichtige Bedeutung zu. Bei diesem werden die Zahnflanken beispielsweise einer Schleifoperation unterzogen, mit der sie auf die genaue Kontur gebracht werden. Eine effiziente Verfahrensweise bei der Herstellung der Verzahnung ist das Wälzschleifen mit einer Schleifschnecke oder das Profilschleifen mit einer Profilschleifscheibe.

Verzahnungen von Zahnrädern, die nach dem Härten einer solchen Hartfeinbearbeitung zu unterziehen sind, um die benötigte präzise Geometrie zu erlangen, haben nach dem Härten in der Regel einen Härteverzug. Dies führt bei entsprechender Größe des Härteverzugs insbesondere beim Hartfeinbearbeiten durch das diskontinuierliche Profilschleifen nach dem Einmitten der Profilschleifscheibe in die Zahnlücke zu einer Vielzahl von Schleifhüben ohne Kontakt zwischen Werkzeug und Werkstück. Will man diese Leerhübe vermeiden, muss die Aufmaßsituation in jeder Zahnlücke bekannt sein.

Es ist bekannt, die Aufmaßverteilung durch einen Messtaster, d. h. berührend, zu ermitteln. Hierfür werden in die Hartfeinbearbeitungsmaschine, d. h. z. B. in die Profilschleifmaschine, integrierte Messtaster eingesetzt. Nachteilig ist hier allerdings, dass die Messzeiten relativ hoch sind. Demgemäß ergeben sich Nebenzeiten, die die Wirtschaftlichkeit des Hartfeinbearbeitungsverfahrens, insbesondere des Schleifverfahrens, reduzieren.

Eine optische Vermessung von Zahnflanken eines Zahnrades offenbart auch die JP 57 158506 A**.** Die US 4 373 804 offenbart ein Verfahren zum elektrooptischen Vermessen eines Bauteils. Die EP 1 607 713 A1 zeigt die Vermessung eines Turbinenrades mit schwalbenschwanzförmigen Nuten mittels eines mechanischen Messtasters.

Der Erfindung liegt daher die **Aufgabe** zugrunde, ein Verfahren zur Messung des Aufmaßes eines Zahnrades vorzuschlagen, mit dem die Aufmaßsituation schneller und dennoch präzise ermittelt werden kann. Dabei ist ein weiterer Aspekt, der durch die Erfindung berücksichtigt werden soll, die Erzielung eines Messergebnisses, dass gegen mögliche Messfehler abgesichert ist.

Die **Lösung** dieser Aufgabe durch die Erfindung ist **dadurch** gekennzeichnet, **dass** die Messung der Lage der Oberfläche zunächst so erfolgt, dass der Lichtstrahl so ausgerichtet ist, dass er in einer Richtung liegt, die senkrecht auf der Drehachse steht, wobei sich die durch diese Richtung bestimmte Gerade und die durch die Drehachse bestimmte Gerade in einem Punkt schneiden, wobei ein vom Abstandssensor ermittelter Wert für die Lage der Oberfläche der Zahnflanke vor der Verwertung einer Plausibilitätsprüfung unterzogen wird, ob der Wert in einem erwarteten Wertebereich liegt, und wobei im Falle dessen, dass nicht plausible Messwerte vorliegen, die optische Abstandsmessung in einer Lage erfolgt, in der der Lichtstrahl um einen definierten Abstand parallel zur Richtung verschoben ist, die senkrecht auf der Drehachse steht, wobei die Messung in der verschobenen Lage erfolgt, indem ein einziger Abstandssensor entlang einer Verschieberichtung in die verschobene Lage bewegt wurde.

Durch die genannte Ausrichtung des Messstrahls wird eine vorteilhafte Auswertung der Daten möglich.

Da unter gewissen Umständen allerdings die Messschärfe beeinträchtigt sein kann, wenn nämlich der Messstrahl unter einem zu spitzen Winkel auf die Oberfläche der Zahnflanke auftrifft, sieht die Erfindung vor, dass ein vom Abstandssensor ermittelter Wert für die Lage der Oberfläche der Zahnflanke und damit für den Wert des Aufmaßes vor der Verwertung einer Plausibilitätsprüfung unterzogen wird, ob der Wert in einem erwarteten Wertebereich liegt. Konkret kann vorgesehen werden, dass die Plausibilitätsprüfung erfolgt, indem ein Messwert einem Vergleich mit einem gespeicherten Wertebereich unterzogen wird. Der Messwert kann verworfen werden, wenn er nicht innerhalb des Wertebereichs liegt. Es kann auch vorgesehen werden, dass ein nicht innerhalb eines vorgegebenen Wertebereichs liegenden Messwert durch einen Messwert ersetzt wird, der sich aus Interpolation oder Extrapolation angrenzender Messwerte ergibt.

Im Falle dessen, dass nicht plausible Messwerte vorliegen oder zu erwarten sind, erfolgt die optische Abstandsmessung in einer Lage, in der der Lichtstrahl um einen definierten Abstand parallel zur Richtung verschoben ist, die senkrecht auf der Drehachse steht (also parallel zu einer Mittenebene, die die Drehachse umfasst).

Der Lichtstrahl ist bevorzugt ein Laserstrahl. Die optische Abstandsmessung erfolgt dabei bevorzugt nach dem Triangulationsverfahren.

Das genannte Verfahren wird dabei insbesondere vor der Durchführung einer Verzahnungsschleifoperation, insbesondere vor der Durchführung einer diskontinuierlichen Profilschleifoperation, durchgeführt.

Die Vorrichtung zur Messung des Aufmaßes eines hartfeinzubearbeitenden Zahnrads zeichnet sich dadurch aus, dass sie einen Abstandssensor hat, der senkrecht verschieblich zu einer Richtung relativ zum zu vermessenden Zahnrad angeordnet ist, die senkrecht auf der Drehachse steht (d. h. die Verschiebung des Abstandssensors erfolgt normal zu einer Mittenebene des Zahnrades, die die Drehachse umfasst).

Die Vorrichtung kann zur Verschiebung des Abstandssensors eine Linearführung mit Linearmaßstab aufweisen. Sie kann ferner Speichermittel zur Speicherung von Wertebereichen von Sollwerten und einen Vergleicher zum Vergleich gespeicherter Werte mit Messwerten aufweisen, wobei der Vergleicher mit den Speichermitteln und mit dem Abstandssensor in Verbindung steht.

Die Vorrichtung ist bevorzugt Bestandteil einer Verzahnungsschleifinaschine, insbesondere einer diskontinuierlich arbeitenden Profilschleifmaschine.

Berührungslos arbeitende optische Messverfahren sind bedeutend schneller als mechanische Messverfahren. Hiervon macht die vorliegende Erfindung Gebrauch.

Bei optischen Systemen, bei denen das reflektierte Licht ausgewertet wird, ergibt sich das Problem, dass die Qualität des Messsignals vom Winkel der reflektierten Fläche abhängig ist, unter dem das Messsignal auf die zu vermessende Oberfläche auftrifft. Bei Verzahnungen wird der Auftreffwinkel zum Fuß hin immer spitzer. Ab einem bestimmten Grenzwinkel ist keine ausreichend genaue Messung mehr möglich. Zur Lösung dieses Problems wird die oben erläuterte Plausibilitätskontrolle vorgeschlagen.

Nach einer ersten bevorzugten Ausführungsform der Erfindung befindet sich das optische Messsystem (Abstandssensor) in Verlängerung der Mittenachse des Zahnrades. Beim Messen des Zahnrades wird überprüft, ob die Messwerte plausibel sind. Diese Plausibilitätsprüfung kann vor der eigentlichen Messung als Kalibriervorgang durchgeführt werden oder während der Messung durch Vergleich der Messwerte mit einem Erwartungsbereich.

Bei dem Kalibriervorgang vor der eigentlichen Messung wird an einem Kalibriernormal ermittelt, bis zu welchem Winkel sicher plausible Messwerte vorliegen, d. h. bis zu welchem Grenzwinkel man sicher plausible Messwerte erhält. Während der Messung werden nur Messwerte bis zu diesem Grenzwinkel verarbeitet, d. h. die mit einem flacheren Winkel gewonnen wurden (die Winkel sind ja aus der Verzahnungsgeometrie bekannt). Die Online-Plausibilitätskontrolle wird aber stets erforderlich sein, da auch andere Einflüsse zu Messfehlern führen können, z. B. Schmutz oder Öltropfen.

Als Ergebnis ergibt sich eine Information über die Aufmaßsituation in jeder Zahnlücke. Nicht plausible Werte werden verworfen oder durch interpolierte bzw. extrapolierte Werte ersetzt.

Im Falle dessen, dass nicht plausible Messwerte vorliegen, sieht die Erfindung vor, dass sich das optische Messsystem (Abstandssensor) in einer Position tangential verschoben zur Mittenachse des Zahnrades befindet. Je nach tangentialer Verschiebung (positiv oder negativ) kann jeweils eine Flanke des Zahnrades mit verbesserten Messwinkeln gemessen werden.

Allerdings kann es auch hier zum Messen im Grenzbereich kommen und somit zu nicht verwertbaren Messungen, so dass dann die oben erläuterte Methode der Plausibilitätsprüfung eingesetzt werden kann.

In der Zeichnung sind Ausführungsbeispiele der Erfindung dargestellt. Es zeigen:
- Fig. 1: schematisch die Draufsicht auf ein hinsichtlich des Aufmaßes zu vermessendes Zahnrad sowie einen Abstandssensor zur Vermessung des Aufmaßes,
- Fig. 2: in vergrößerter Darstellung zwei benachbarte Zähne des Zahnrads und das sich auf den Zahnflanken befindliche Aufmaß und
- Fig. 3: in der Darstellung nach Fig. 1 eine hierzu alternative Ausführungsform der Erfindung.

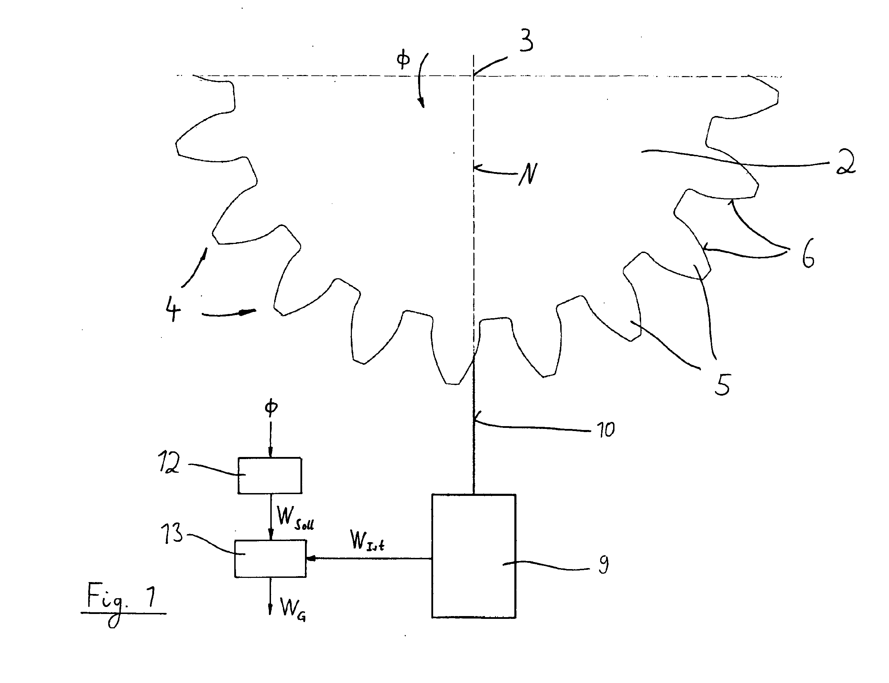

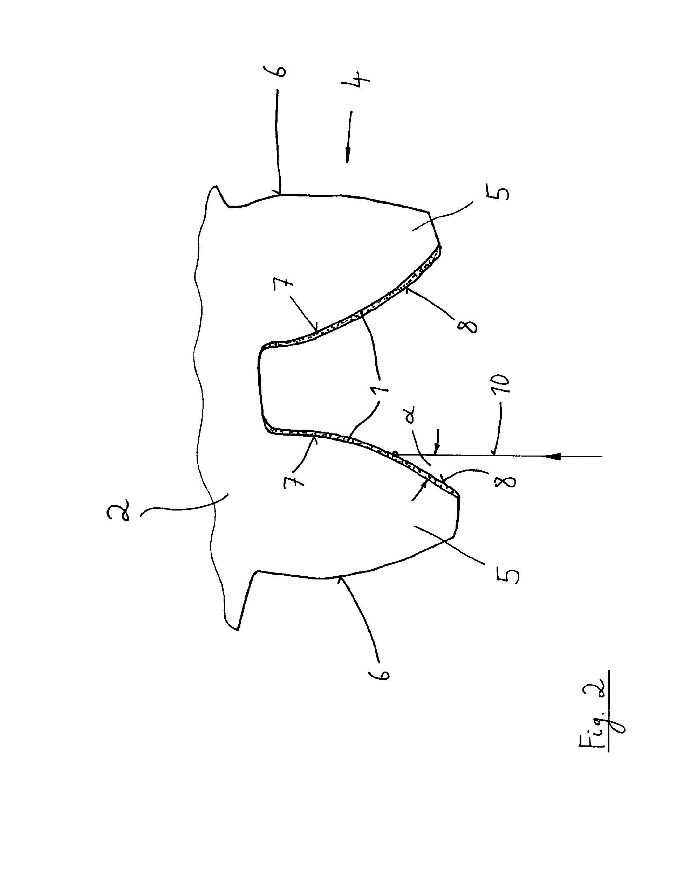

In Fig. 1 ist schematisch ein Zahnrad 2 skizziert, das auf einer (nicht dargestellten) Werkstückspindel aufgenommen ist, deren Achse senkrecht auf der Zeichenebene steht. Diese Achse ist als Drehachse 3 markiert. Am Außenumfang des Zahnrades ist eine Außenverzahnung 4 angeordnet. Demgemäß hat das Zahnrad 2 eine Anzahl Zähne 5, die jeweilige Zahnflanken 6 aufweisen. In die Lücke, die zwei benachbarte Zahnflanken 6 bilden, taucht beim Profilschleifen in bekannter Weise eine entsprechend profilierte Schleifscheibe ein. Wie anhand der Detaildarstellung in Fig. 2 gesehen werden kann, weisen die Zahnflanken 6 ein Schleilaufmaß 1 auf, das nach dem Härten des Zahnrades 2 abgeschliffen werden muss, um die fertig bearbeitete Geometrie 7 der Zahnflanke 6 zu erhalten.

In den Figuren ist vereinfacht die Situation bei der Vermessung eines geradverzahnten Stirnrads gezeigt. Analoges gilt bei schrägverzahnten bzw. innenverzahnten Zahnrädern.

Die Kenntnis der Aufmaßsituation, d. h. die Größe des vorliegenden Aufmaßes an jeder Zahnflanke 6 über der Zahnhöhe, ist dabei wesentlich dafür, um das Zahnrad 2 relativ zur Schleifscheibe optimal einmitten zu können. Ferner kann nur dadurch der optimale Schleifzyklus definiert werden, d. h. ein Schleifen, das mit minimalen Leerhüben ohne Spanabtrag auskommt.

Demgemäß wird vorliegend in der nachfolgend beschriebenen Weise das Aufmaß 1 an den Zahnflanken 6 vor dem Schleifen ermittelt:

Die Aufmaßmessung erfolgt mittels eines Abstandssensors 9, der einen Lichtstrahl 10 aussendet. Aus der Analyse des reflektierten Lichts kann der Abstand zwischen Abstandssensor 9 und dem Punkt der Oberfläche 8 der Zahnflanke 6 ermittelt werden, der aktuell vermessen wird (s. Fig. 2). Der Lichtstrahl 10 ist dabei so ausgerichtet, dass er in einer Richtung N liegt, die senkrecht auf der Drehachse 3 steht. D. h. der Lichtstrahl 10 liegt in der Mittenebene des Zahnrades 2, die auch die Drehachse 3 umfasst.

Wird das Zahnrad 2 um die Drehachse 3 um einen Drehwinkel Φ gedreht, kann folglich die Zahnflanke 6 über der Zahnhöhe abgefahren und das jeweilige Aufmaß gemessen werden.

Trifft der Messstrahl 10 senkrecht auf eine Oberfläche auf, ist die Messung optimal. Indes kann es problematisch werden, wenn der Messstrahl 10 unter einem zu kleinen Winkel α auf die Oberfläche 8 auftritt (s. Fig. 2). In diesem Falle wird die Messunsicherheit erhöht, bis schließlich gar keine Messung mehr möglich ist (Winkel α gegen Null Grad).

Um dieses Problem zu eliminieren, sieht die Erfindung folgendes vor:

Zum einen ist eine Plausibilitätsprüfung vorgesehen, die in Fig. 1 angedeutet ist. Hierfür ist ein Speichermittel 12 vorhanden, in dem für ein konkretes Zahnrad 2 für jeden Drehwinkel Φ ein Sollwert W_{Soll} samt Toleranzband gespeichert ist. Demgemäß gibt der Sollwert W_{Soll} an, in welchem Wertebereich ein Aufmaßwert liegen kann, der für einen Winkel Φ gemessen wird. Der Sollwert W_{Soll} wird einem Vergleicher 13 zugeführt. Dieser erhält neben dem Sollwert W_{Soll} auch den vom Abstandssensor 9 aktuell gemessenen Messwert Wᵢₛₜ. Im Vergleicher 13 erfolgt ein Vergleich, ob der aktuelle Messwert W_{Ist} innerhalb des Wertebereichs liegt, der durch den Sollwert samt Toleranzband W_{Soll} vorgegeben ist. Ist dies der Fall, wird der Messwert als geprüfter Wert W_{G} ausgegeben und als Aufmaßwert für die betreffende Flankenposition weiter- bzw. ausgegeben.

Liegt der Messwert W_{Ist} indes nicht im Bereich des Toleranzbandes gemäß dem Wert W_{Soll}, ist davon auszugehen, dass es aufgrund der oben beschriebenen Messunschärfe zu einer Fehlmessung gekommen ist. Demgemäß ist der Messwert W_{Ist} nicht brauchbar.

In diesem Falle stehen zwei Möglichkeiten zur Verfügung: Zum einen kann der Messwert als nicht ordnungsgemäß verworfen und eine entsprechende Lücke im Verlauf des Aufmaßes über der Zahnhöhe belassen werden. Zum anderen ist es aber auch möglich, den Messwert zu verwerfen und durch einen Wert zu ersetzen, der sich aus der Interpolation zwischen benachbarten Werten ergibt oder der sich aus der Extrapolation aus bereits gemessenen und für gut befundenen Messwerten ergibt. Diese Möglichkeiten sind nicht Gegenstand der Erfindung.

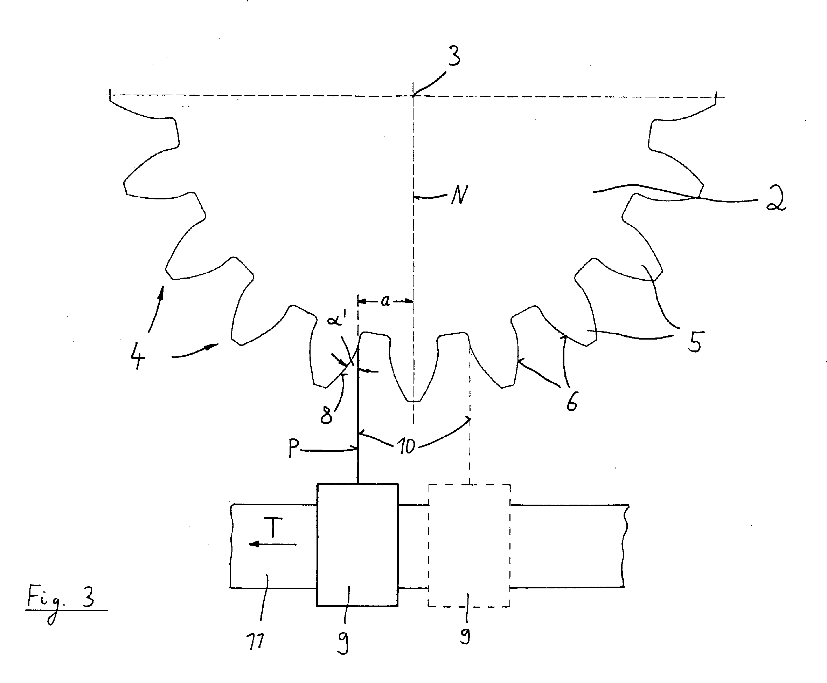

Die Erfindung sieht vor, im genannten Falle - d. h. wenn die vermessene Stelle einen zu kleinen Winkel α zum Lichtstrahl 10 aufweist - zu brauchbaren Messwerten zu gelangen. Dies ist in Fig. 3 skizziert:

Hiernach kann der Abstandssensor 9 auf einer Linearführung 11 in eine Verschieberichtung T verschoben werden, die senkrecht auf der Richtung N steht; demgemäß wird der Abstandssensor 9 so verschoben, dass der Lichtstrahl 10 in einer Richtung P parallel zur Richtung N strahlt. Der Verschiebeweg des Abstandssensors 9 aus der Mittenebene des Zahnrads 2 ist mit a bezeichnet. Wie anhand Fig. 3 gesehen werden kann, ist damit der Winkel α', unter dem der Lichtstrahl 10 auf die Oberfläche 8 der Zahnflanke 6 auftrifft, deutlich größer, so dass eine brauchbare Messung erfolgen kann.

In Kenntnis dessen, dass grundsätzlich ab einem gewissen Flankenwinkel die genannte Problematik der Messunschärfe auftritt, kann auch ohne Durchführung der oben erläuterten Plausibilitätskontrolle ab einer gewissen Steilheit der Flanke die Messung in der verschobenen Stellung erfolgen. Dies kann natürlich beiderseits der Mittenebene des Zahnrads 2 erfolgen, was durch den gestrichelt in Fig. 3 eingezeichneten Abstandssensor 9 angedeutet ist. Während die mit ausgezogenen Linien eingezeichnete Stellung des Abstandssensors 9 für die in Fig. 3 rechten Zahnflanken 6 eingesetzt wird, kommt die mit gestrichelten Linie eingezeichnete Stellung für die Messung der linken Zahnflanken in Frage.

Die genannte Messung mittels des optisch arbeitenden Abstandssensors 9 ist als solche aus verschiedenen Bereichen der Technik bekannt. Es handelt sich hierbei um eine elektronische Distanzmessung anhand der Laufzeitmessung, der Phasenlagemessung oder der Lasertriangulation von Licht, wobei zumeist ein Laserstrahl eingesetzt wird. Aktive und passive optische Abstandsmessverfahren sind u. a. das sog. Lichtschnittverfahren und die Triangulation. Die Lasertriangulation und das Laserinterferometer eignen sich bevorzugt für kurze Entfernungen, die Laufzeitverfahren dagegen eher für große Entfernungen, weshalb sie hier kaum geeignet ist.

Bei der Laufzeitmessung wird ein zeitlicher Lichtpuls ausgesandt. Die Pulslaufzeit ist die Zeit, die der Lichtstrahl braucht, um zur Quelle reflektiert zu werden. Durch Messen dieser Laufzeit kann man über die Lichtgeschwindigkeit die Distanz zwischen Quelle und Objekt ermitteln. Der Vorteil dieses Verfahrens ist die geringe Reaktionszeit. Das Verfahren hat allerdings bevorzugt Messbereiche von 1 Meter bis mehrere Kilometer, so dass es vorliegend nicht optimal ist. Das Problem ist hier die Messung extrem kurzer Zeiten. Um die Anforderung an die Zeitmessung zu verringern, werden Verfahren eingesetzt, bei denen der Laserstrahl selbst frequenzmoduliert oder mit einem hochfrequenten Signal moduliert wird.

Die Phasenverschiebung des an der Oberfläche 8 reflektierten Lichtstrahls 10 oder dessen Modulation gegenüber dem ausgesandten Strahl oder dessen Modulation ist entfernungsabhängig. Diese Phasenverschiebung kann gemessen und benutzt werden, um die zurückgelegte Distanz zu ermitteln. Wird die Laserfrequenz selbst zur Überlagerung genutzt, arbeitet das Gerät wie ein Laserinterferometer. Laserinterferometer messen keine absoluten Weglängen sondern nur die relative Änderung bei Verschiebung des Zieles bzw. eines Referenzspiegels. Beim Verschieben des Spiegels wird die Summe aus ausgesandtem und reflektiertem Strahl periodisch moduliert (sog. Interferenz). Der Lichtstrahl durchläuft bei der Verschiebung um eine halbe Lichwellenlänge genau eine Periode. Zählt man die Durchgänge und multipliziert sie mit der Lichtwellenlänge, erhält man die gesuchte Wegstrecke. Mit einer genaueren Auswertung des Signals erreicht man Genauigkeiten von etwa einer Hundertstel Wellenlänge, d. h. bei sichtbarem Licht eine Genauigkeit im Nanometerbereich. Der Vorteil dieser Methode ist die gegenüber Laufzeitverfahren höhere Auflösung, die mit geringerem messtechnischen Aufwand zu realisieren ist.

Ein Problem ist die fehlende Eindeutigkeit der Signale bei Entfernungen eines Vielfachen der halben Laser- bzw. Modulationswellenlänge. Diese Mehrdeutigkeit interferometrischer Verfahren kann mit Hilfe einer Frequenzmodulation des Lasers oder dessen Hochfrequenz-Modulationssignales umgangen werden. Man führt dadurch in die Phasenmessung eine Laufzeitkomponente ein. Durch eine niedrigere Frequenz erhält man eine größere Distanz eines eindeutigen Ergebnisses Bei der Lasertriangulation wird der Laserstrahl (bei geringen Anforderungen auch nur die Strahlung einer Leuchtdiode) auf das Messobjekt fokussiert und mit einer daneben im Sensor befindlichen Kamera beobachtet. Ändert sich die Entfernung des Messobjektes vom Sensor, ändert sich auch der Winkel, unter dem der Lichtpunkt beobachtet wird und damit die Position seines Abbildes auf dem Fotoempfänger. Aus der Positionsänderung wird mit Hilfe der Winkelfunktionen die Entfernung des Objektes vom Laserprojektor berechnet. Dieses Verfahren wird vorliegend bevorzugt eingesetzt.

### Bezugszeichenliste:

- 1: Aufmaß
- 2: Zahnrad
- 3: Drehachse
- 4: Verzahnung
- 5: Zahn
- 6: Zahnflanke
- 7: fertig bearbeitete Geometrie
- 8: Oberfläche
- 9: Abstandssensor
- 10: Lichtstrahl
- 11: Linearführung
- 12: Speichermittel
- 13: Vergleicher

- N: Richtung senkrecht auf der Drehachse
- P: Richtung parallel zur Richtung N
- T: Verschieberichtung
- a: Abstand
- Φ: Drehwinkel
- α, α': Winkel
- W_{Soll}: Sollwert samt Toleranzband
- w_{Ist}: Messwert
- W_{G}: geprüfter Wert

## Patentansprüche

1. Verfahren zur Messung des Aufmaßes (1) eines hartfeinzubearbeitenden Zahnrads (2) mit einer Drehachse (3), wobei das Zahnrad (2) an seinem Außen- und/oder Innenumfang eine Verzahnung (4) mit einer Anzahl Zähne (5) aufweist, wobei die Zähne (5) auf ihren Zahnflanken (6) ein gegenüber der fertig bearbeiteten Geometrie (7) vorhandenes Aufmaß (1) aufweisen, wobei die Lage der Oberfläche (8) der mit Aufmaß (1) versehenen Zahnflanke (6) mittels optischer Abstandsmessung von einem Abstandssensor (9) ermittelt wird, indem ein Lichtstrahl (10) vom Abstandssensor (9) auf die Oberfläche (8) gerichtet wird, und wobei der Lichtstrahl (10) so auf die Oberfläche (8) geleitet wird, dass er senkrecht auf der Drehachse (3) steht (N) oder parallel zu dieser Richtung ist (P),
**dadurch gekennzeichnet,**
**dass** die Messung der Lage der Oberfläche (8) zunächst so erfolgt, dass der Lichtstrahl (10) so ausgerichtet ist, dass er in einer Richtung (N) liegt, die senkrecht auf der Drehachse (3) steht, wobei sich die durch diese Richtung (N) bestimmte Gerade und die durch die Drehachse (3) bestimmte Gerade in einem Punkt schneiden, wobei ein vom Abstandssensor (9) ermittelter Wert für die Lage der Oberfläche (8) der Zahnflanke (6) vor der Verwertung einer Plausibilitätsprüfung unterzogen wird, ob der Wert in einem erwarteten Wertebereich liegt, und wobei im Falle dessen, dass nicht plausible Messwerte vorliegen, die optische Abstandsmessung in einer Lage erfolgt, in der der Lichtstrahl (10) um einen definierten Abstand (a) parallel zur Richtung (N) verschoben ist, die senkrecht auf der Drehachse (3) steht, wobei die Messung in der verschobenen Lage (P) erfolgt, indem der Abstandssensor (9) entlang einer Verschieberichtung (T) in die verschobene Lage (P) bewegt wurde.

2. Verfahren nach Anspruch 1, **dadurch gekennzeichnet, dass** die Plausibilitätsprüfung erfolgt, indem ein Messwert einem Vergleich mit einem gespeicherten Wertebereich unterzogen wird.

3. Verfahren nach Anspruch 1 oder 2, **dadurch gekennzeichnet, dass** ein Messwert verworfen wird, wenn er nicht innerhalb des Wertebereichs liegt.

4. Verfahren nach einem der Ansprüche 1 bis 3, **dadurch gekennzeichnet, dass** der Lichtstrahl (10) ein Laserstrahl ist.

5. Verfahren nach einem der Ansprüche 1 bis 4, **dadurch gekennzeichnet, dass** die optische Abstandsmessung mittels des Triangulationsverfahrens erfolgt.

6. Verfahren nach einem der Ansprüche 1 bis 5, **dadurch gekennzeichnet, dass** es vor der Durchführung einer Verzahnungsschleifoperation, insbesondere vor der Durchführung einer diskontinuierlichen Profilschleifoperation, durchgeführt wird.

## Claims

1. Method for the measurement of the stock (1) of a gear (2) with an axis of rotation (3) which has to be finished in the hardened state, wherein the gear (2) has a gearing (4) with a plurality of teeth (5) at its outer and/or inner circumference, wherein the teeth (5) have, compared with the finished geometry (7), a stock (1) on their tooth flanks (6), wherein the position of the surface (8) of the tooth flank (6) with the stock (1) is detected by using optical distance measurement by means of a distance sensor (9) by directing a light beam (10) by the distance sensor (9) onto the surface (8) and wherein the light beam (10) is guided onto the surface (8) in such a way that it is perpendicular (N) to the axis of rotation (3) or that it is parallel (P) to this direction,
**characterized in that**
the measurement of the position of the surface (8) occurs at first in such a way that the light beam (10) is oriented so that it lies in a direction (N) which is perpendicular on the axis of rotation (3), wherein the line which is determined by this direction (N) and the line which is determined by the axis of rotation (3) meet in a point, wherein a value of the position of the surface (8) of the tooth flank (6) which is detected by the distance sensor (9) is subject of a plausibility check before use of the value if it is within an expected range of values and wherein in the case that no plausible measured values are obtained the optical distance measurement occurs in a position in which the light beam (10) is displaced by a defined distance (a) parallel to the direction (N) which is perpendicular to the axis of rotation (3), wherein the measurement in the displaced position (P) occurs by having moved the distance sensor (9) along a direction of translational movement (T) into the displaced position (P).

2. Method according to claim 1, **characterized in that** the plausibility check occurs by comparing a measured value with a stored value.

3. Method according to claim 1 or 2, **characterized in that** a measured value is disallowed if it is not within the range of values.

4. Method according to one of claims 1 to 3, **characterized in that** the light beam (10) is a laser beam.

5. Method according to one of claims 1 to 4, **characterized in that** the optical distance measurement occurs by the method of triangulation.

6. Method according to one of claims 1 to 5, **characterized in that** it takes place prior a gear grinding operation, especially prior a discontinuous profile grinding operation.

## Revendications

1. Procédé de mesure des dimensions (1) d'une roue dentée (2) devant être traitée par traitement dur et fin, avec un axe de rotation (3), la roue dentée (2) comportant au niveau de sa circonférence extérieure et/ou intérieure un endentement (4) pourvu d'un certain nombre de dents (5), les dents (5) comportant sur leurs flancs de dent (6) une dimension (1) disponible par rapport à la géométrie (7) finie, la position de la surface (8) du flanc de dent (6) pourvu de la dimension (1) étant calculée par mesure de distance optique au moyen d'un capteur de distance (9) en orientant un faisceau lumineux (10) provenant du capteur de distance (9) sur la surface (8) et le faisceau lumineux (10) étant guidé de telle sorte sur la surface (8) qu'il se place perpendiculairement à l'axe de rotation (3) (N) ou parallèlement à cette direction (P), **caractérisé en ce que** la mesure de la position de la surface (8) est d'abord réalisée en orientant le faisceau lumineux (10) de telle sorte qu'il se place dans une direction (N) perpendiculaire à l'axe de rotation (3), la droite définie par cette direction (N) et la droite définie par l'axe de rotation (3) se croisant en un point, une valeur déterminée par le capteur de distance (9) pour la position de la surface (8) du flanc de dent (6) étant soumise à l'analyse d'un contrôle de plausibilité pour savoir si la valeur se situe dans une plage de valeurs attendue et, en présence de valeurs de mesure non plausibles, la mesure de distance optique se produisant dans une position dans laquelle le faisceau lumineux (10) est décalé d'une distance (a) définie parallèlement à la direction (N) perpendiculaire à l'axe de rotation (3), la mesure se produisant dans la position décalée (P) en déplaçant le capteur de distance (9) dans la position décalée (P) le long d'une direction de déplacement (T).

2. Procédé selon la revendication 1, **caractérisé en ce que** le contrôle de plausibilité se produit en comparant une valeur de mesure à une plage de valeurs mémorisée.

3. Procédé selon la revendication 1 ou 2, **caractérisé en ce qu'**une valeur de mesure est rejetée lorsqu'elle ne se situe pas à l'intérieur de la plage de valeurs.

4. Procédé selon l'une quelconque des revendications 1 à 3, **caractérisé en ce que** le faisceau lumineux (10) est un faisceau laser.

5. Procédé selon l'une quelconque des revendications 1 à 4, **caractérisé en ce que** la mesure de distance optique est réalisée par procédé de triangulation.

6. Procédé selon l'une quelconque des revendications 1 à 5, **caractérisé en ce qu'**il est effectué avant la réalisation d'une opération de meulage d'endentement, notamment avant la réalisation d'une opération de meulage de profilé discontinu.
